# EUROPEAN PATENT APPLICATION

(11) **EP 4 625 723 A1**
(43) Date of publication of application: **01.10.2025**
(21) Application number: 23893690.0
(22) Date of filing: 15.11.2023
(51) Int. Cl.: H01R 31/02, H01B 7/40

(54) **INTEGRATED WIRE HARNESS STRUCTURE AND VEHICLE**

(30) Priority: 22.11.2022 CN 202211468886
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2023/131709
(87) International publication number: WO 2024/109600

(57) **Abstract**

The present disclosure relates to an integrated wire harness structure and a vehicle. The integrated wire harness structure includes a wire harness configured to be electrically connected to an electric device to conduct current. The wire harness includes at least one conductor (1) and at least one positioning portion (3). At least one end of the conductor (1) extends to form a connection portion (2) which is configured to be electrically connected to the electrical device, and the positioning portion (3) is configured to position the conductor (1). The connection portion and the conductor of the present disclosure are integrated, and the connection portion is formed by the extension of the conductor, eliminating the use of copper terminals and avoiding the electrochemical corrosion and the risks caused by the corrosion. **In** addition, the welding between the terminal and the conductor can also be eliminated, thereby not only decreasing the raw material cost of the wire harnesses, but also reducing the processing time.

## Description

### CROSS-REFERENCE TO RELATED APPLICATION

The present disclosure claims priority to Chinese Invention Patent Application No. 202211468886.3, filed November 22, 2022, and entitled "integrated wire harness structure and vehicle".

### TECHNICAL FIELD

The present disclosure relates to the technical field of electrical connections, and particularly to an integrated wire harness structure and a vehicle.

### BACKGROUND

With the increasing usage of electrical connection terminals, pure copper terminals or copper-aluminum terminals have become a commonly adopted type of connection wire terminals. Moreover, in order to achieve cable lightweighting, materials such as aluminum and aluminum alloys - which have relatively abundant reserves and lighter weight - are being utilized as conductive materials for cable conductors. However, due to a large difference in electrode potential between copper and aluminum, when a copper terminal is directly connected to a conductor of an aluminum cable, electrochemical corrosion occurs between copper and aluminum under the action of air and moisture, and the conductor of the aluminum cable is prone to corrosion, resulting in an increase in a contact resistance of a copper-aluminum connection area. During long-term use, this can easily result in power outages. In severe cases, it may even result in equipment burnout, explosions, or fires, ultimately affecting the normal operation of power systems.

Therefore, based on years of experience and practice in related industries, the inventor proposes an integrated wire harness structure and a vehicle, so as to overcome the defects of the prior art.

### SUMMARY

The present disclosure aims to provide an integrated wire harness structure and a vehicle, in which a connection portion and a conductor are integrated and the connection portion is formed by the extension of the conductor, eliminating the use of copper terminals, and avoiding the electrochemical corrosion and the risks caused by the corrosion. In addition, the welding between the terminal and the conductor can also be eliminated, thereby not only decreasing the raw material cost of the wire harnesses, but also reducing the processing time.

The objective of the present disclosure is achieved by an integrated wire harness structure, including a wire harness configured to be electrically connected to an electric device to conduct current. The wire harness includes at least one conductor and at least one positioning portion. At least one end of the conductor extends to form a connection portion which is configured to be electrically connected to the electrical device. the positioning portion is configured to position the conductor.

The objective of the present disclosure is further achieved by a vehicle, including a vehicle body and the aforementioned integrated wire harness structure. The wire harness is arranged to extend along a contour of the vehicle body, and is connected to the vehicle body through the positioning portion.

As can be seen from above, the integrated wire harness structure and the vehicle of the present disclosure have the following advantageous effects.

In the integrated wire harness structure of the present disclosure, the connection portion and the conductor are integrated, and the connection portion is formed by the extension of the conductor, eliminating the use of copper terminals and avoiding the electrochemical corrosion and the risks caused by the corrosion. In addition, the welding between the terminal and the conductor can also be eliminated, thereby not only decreasing the raw material cost of the wire harnesses, but also reducing the processing time.

In the vehicle of the present disclosure, the integrated wire harness structure is adopted, so that the electrochemical corrosion is greatly reduced, and the electrical safety is improved.

### BRIEF DESCRIPTION OF THE DRAWINGS

For a clearer illustration of technical features in the embodiments of the present disclosure, a brief description of the drawings for the embodiments will be given below. The drawings described below involve only some embodiments of this disclosure. For those of ordinary skill in the art, other drawings can be derived from these drawings without any inventive efforts. In the drawings:
FIG. 1 illustrates a schematic diagram of an integrated wire harness structure according to the first embodiment of the present disclosure.
FIG. 2 illustrates a schematic diagram of an integrated wire harness structure according to the second embodiment of the present disclosure.
FIG. 3 illustrates a schematic diagram of an integrated wire harness structure according to the third embodiment of the present disclosure.
FIG. 4 illustrates a cross-sectional view of a connection portion of the integrated wire harness structure according to the first embodiment of the present disclosure.
FIG. 5 illustrates a schematic diagram of a connection portion with a bolt structure in an integrated wire harness structure of the present disclosure.
FIG. 6 illustrates a schematic diagram of an integrated wire harness structure according to the fourth embodiment of the present disclosure.
FIG. 7 illustrates a cross-sectional view taken along A-A in FIG. 6.
FIG. 8 illustrates a cross-sectional view of a connection portion of the integrated wire harness structure according to the fourth embodiment of the present disclosure.

### DETAILED DESCRIPTION OF THE EMBODIMENTS

For a clearer understanding of the technical features, objectives and effects of the present disclosure, specific embodiments of the present disclosure will now be described with reference to the drawings.

The specific embodiments of the present disclosure described here are only for the purpose of explaining the present disclosure, and cannot be construed as limiting the present disclosure in any way. Under the teaching of the present disclosure, those skilled in the art can conceive any possible variation based on the present disclosure, which should be regarded as falling within the scope of the present disclosure. It should be noted that when an element is referred to as being "provided on" another element, it may be directly on another element or there may be an intervening element. When an element is regarded as being "connected to" another element, it may be directly connected to another element or there may be an intervening element at the same time. The terms "mount" and "connect" should be understood in a broad sense. For example, a connection may be a mechanical connection or an electrical connection, or an internal communication between two elements, or a direct connection, or an indirect connection through an intermediate medium. For those of ordinary skills in the art, the specific meanings of the above terms can be understood according to the specific conditions. The terms 'vertical', 'horizontal', 'upper', 'lower', 'left', 'right' and similar expressions used herein are for an illustration purpose only rather than indicating a unique embodiment.

Unless otherwise defined, all technical and scientific terms used herein have the same meanings as those commonly understood by those skilled in the art of the present disclosure. The terms used in the Specification of the present disclosure are only for the purpose of describing the specific embodiments, rather than limiting the present disclosure. The term "and/or" used herein includes any and all combinations of one or more of the associated items listed.

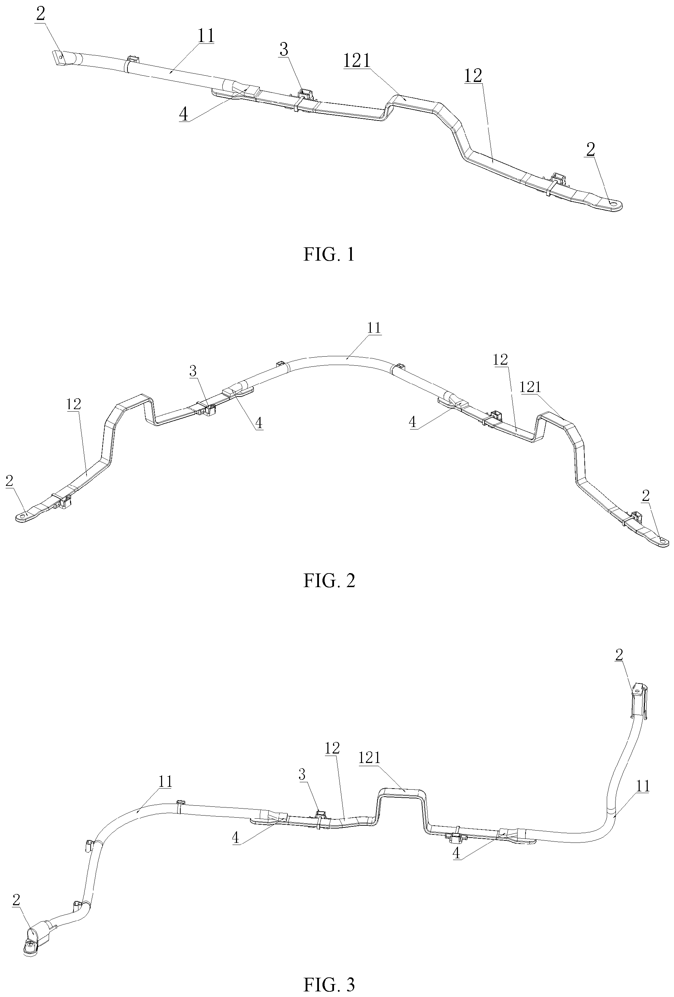

As illustrated in FIGS. 1 to 8, the present disclosure provides an integrated wire harness structure, which includes a wire harness configured to be electrically connected to an electric device to conduct current. The wire harness is generally an aluminum wire harness, which is connected to the mated electrical device and serves to conduct current. The wire harness includes at least one conductor 1 (which may be an electrical connection framework) and at least one positioning portion 3. At least one end of the conductor 1 extends to form a connection portion 2 which is configured to be electrically connected to the electrical device. The positioning portion 3 is configured to position the conductor.

In the existing wire harnesses, the cable conductor is generally connected to a terminal, and then connected to the electrical device. In particular, when an aluminum cable is used, it needs to be welded to a copper terminal, and then connected to the electrical device through the copper terminal. However, the contact between copper and aluminum causes an electrochemical corrosion, thereby reducing the service lives of the terminal and the cable. In the present disclosure, the conductor of the wire harness extends to form the connection portion (connection terminal), which is directly connected to the electrical device, eliminating the copper terminals and also eliminating the welding between the terminal and the conductor, thereby not only decreasing the raw material cost of the wire harnesses but also reducing the processing time.

In the prior art, the electrical connection framework and the connection terminal are connected through a spacer metal layer instead of being an integral structure. In the present disclosure, the connection portion 2 and the conductor 1 are integrated, and the connection portion 2 is formed by the extension of the conductor 1, which reduces the use of copper terminals and avoids the electrochemical corrosion and the risks caused by the corrosion.

In the integrated wire harness structure of the present disclosure, the connection portion and the conductor are an integral structure, and the connection portion is formed by the extension of the conductor, which eliminates copper terminals and avoids the electrochemical corrosion and the risks caused by the corrosion. In addition, the welding between the terminal and the conductor can also be eliminated, thereby not only decreasing the raw material cost of the wire harnesses, but also reducing the processing time.

Further, the conductor is made of 1000 series aluminum alloy, 2000 series aluminum alloy, 3000 series aluminum alloy, 4000 series aluminum alloy, 5000 series aluminum alloy, 6000 series aluminum alloy, 7000 series aluminum alloy, or 8000 series aluminum alloy.

The use of technologically mature international-grade aluminum alloys reduces production cost of the conductor, and ensures more stable performance of the conductor. The conductor made of aluminum alloys corresponding to the above brands has higher hardness and better machinability, and is suitable for mass production.

Further, the conductor is made of one or more selected form the group consisting of carbon, aluminum, silver, and copper.

Further, as illustrated in FIGS. 1, 2, 3 and 6, the conductor 1 includes a plurality of conductor cores connected end to end, at least one of which is a flexible conductor core 11.

When the wire harness is arranged on a vehicle body, there are some positions that require avoidance or involve complex installation environments. In such cases, part of the wire harness should be made of a flexible material to allow installation position adjustment and conformal installation. The other part of the wire harness should be mounted to match the vehicle body, extend along the shape of the vehicle body, and be wholly mounted on the vehicle body as an integrated arrangement. Thus, a rigid portion also should be provided on the wire harness. The flexible conductor core enables the conductor 1 to have flexibility so as to fit the vehicle body.

Further, the conductor contains at least two materials selected from the group consisting of carbon, aluminum, silver, and copper. For example, the conductor contains copper and aluminum, or copper and carbon, or aluminum and carbon.

Further, the plurality of conductor cores have cross-sectional shapes different from each other. The cross-sectional shape is one or more selected from the group consisting of a circle, an ellipse, a rectangle, a polygon, an A-shape, a B-shape, a D-shape, an M-shape, an N-shape, an O-shape, an S-shape, an E-shape, an F-shape, an H-shape, a K-shape, an L-shape, a T-shape, a P-shape, a U-shape, a V-shape, a W-shape, an X-shape, a Y-shape, a Z-shape, a semi-arc shape, an arc shape, and a wave shape.

Further, the cross-sectional shape of at least one of the conductor cores is different from cross-sectional areas of other conductor cores.

Further, the hardness of the connection portion 2 is higher than that of the conductor 1. The connection portion 2 is manufactured by stamping. After stamping, the hardness or the density is greater, and the electrical conductivity is different. A higher electrical conductivity provides a better current-carrying capacity.

Further, the conductor includes at least a first conductor core segment and a second conductor core segment. A cross-sectional shape of the first conductor core segment is different from that of the second conductor core segment, and/or a cross-sectional area of the first conductor core segment is different from that of the second conductor core segment.

Further, the conductor further includes a transition connection segment. A first end and a second end of the transition connection segment are connected to the first conductor core segment and the second conductor core segment, respectively. A cross-section of the first end of the transition connection segment is the same as that of the first conductor core segment, and a cross-section of the second end of the transition connection segment is the same as that of the second conductor core segment.

Further, the conductor includes at least one bending position where the transition connection segment is located.

Further, a difference in cross-sectional area between the two conductor core segments with different diameters is less than or equal to 20%.

The conventional conductive cable typically requires its each section to have the same cross-sectional area to conduct the same amount of current. However, for the conductor cores with cross-sections of different shapes connected to each other, since the cavities in the cross-sections of different shapes have different cross-sectional areas, the conductor cores of different shapes also have different cross-sectional areas. For example, for a multi-core conductor core and a solid conductor core, due to the presence of gaps between wire cores of the multi-core conductor core, under the condition of the same conducted current, the multi-core conductor core exhibits a larger cross-sectional area than the solid conductor core.

In order to ensure the conductive property of the conductor core and facilitate the arrangement thereof on the vehicle body, the difference in cross-sectional area between the conductor cores of different shapes should not be too large. Otherwise, the conductor core with a larger cross-sectional area will be difficult to be mounted on the vehicle body, and may even interfere with other components on the vehicle body to produce abnormal noises. As verified by multiple experiments carried out by the inventor, it is optimal that the difference in cross-sectional area between every two cross-sections of different shapes of the conductor core does not exceed 20%, which will not affect the mounting of the conductor core on the vehicle body. During the selection of the cross-section of the conductor core, those with a large difference in shape or a large difference in cavity size should not be chosen.

Further, an absolute value of a difference in electrical conductivity between the connection portion 2 and the conductor 1 is less than or equal to 75%.

In practical applications, considering factors such as cost and material properties, the conductor 1 may be made of materials with different electrical conductivities. For example, silver has a high electrical conductivity but also a high cost, making it suitable for a conductor requires good conductive properties, such as an extremely thin conductor 1 used to transmit signals of high importance. For example, in some conductors 1 for current transmission, a metal material like aluminum with a low electrical conductivity but a relatively low cost may be selected, and when it is used in power lines, the cross-sectional area can be appropriately increased to ensure the magnitude of the transmitted current.

In order to verify the influence of the absolute value of the difference in electrical conductivity between the connection portion 2 and the conductor 1 on the temperature rise and the stability of the wire harness, the present disclosure adopts the completely identical connection portions 2, and the conductors 1 with the same cross-sectional area. The connection portion 2 is connected to the conductor 1, and it is ensured that one of the conductors 1 is made of a material with a different electrical conductivity. The same current is conducted to test the temperature rise and the stability of the wire harness. The test of the temperature rise is to conduct the same current in the wire harness, detect temperatures at a same position of the wire harness before electrification and after temperature stabilization in a closed environment, and take an absolute value of the temperature difference. In this embodiment, it may be preset that a temperature rise greater than 50K is unqualified.

The test of the stability is to connect the wire harness to a same electrical device, continuously conduct a same signal, test the working stability of the electrical device for 100 hours, and record any error reported by the electrical device. In this embodiment, when the number of error reports made by the electrical device within a preset test time is greater than 3, it is unqualified.

Table 1 shows the influence of the absolute value of the difference in electrical conductivity between the connection portion 2 and the conductor 1 on the temperature rise and the stability of the wire harness:

**Table 1**

| | | | | | | | | | |
|---|---|---|---|---|---|---|---|---|---|
| Absolute value of the difference in electrical conductivity between the connection portion 2 and the conductor 1 (%) | | | | | | | | | |
| 5 | 15 | 25 | 35 | 45 | 55 | 65 | 75 | 80 | 85 |
| Temperature rise of the wire harness (k) | | | | | | | | | |
| 23.6 | 24.8 | 29.7 | 34.6 | 37.4 | 41.9 | 45.2 | 49.6 | 53.4 | 59.5 |
| The number error reports made by the electrical device (number) | | | | | | | | | |
| 0 | 0 | 0 | 0 | 0 | 1 | 2 | 3 | 5 | 8 |

As can be seen from Table 1, when the absolute value of the difference in electrical conductivity between the connection portion 2 and the conductor 1 is less than 75% under the same cross-sectional area, the performance of each conductor 1 in conducting current is not much different, and both the temperature rise of the wire harness and the number of error reports made by the electrical device are within the qualified range. When the absolute value of the difference in electrical conductivity between the connection portion 2 and the conductor 1 is greater than 75%, due to a large difference between the performances of the conductors 1 in conducting current, which has exceeded the rated current conducted by the conductor 1 and the stability range of the current conducted by the electrical device, both the temperature rise of the wire harness and the number of error reports made by the electrical device are unqualified. Thus, the absolute value of the difference in electrical conductivity between the connection portion 2 and the conductor 1 should be within 75%.

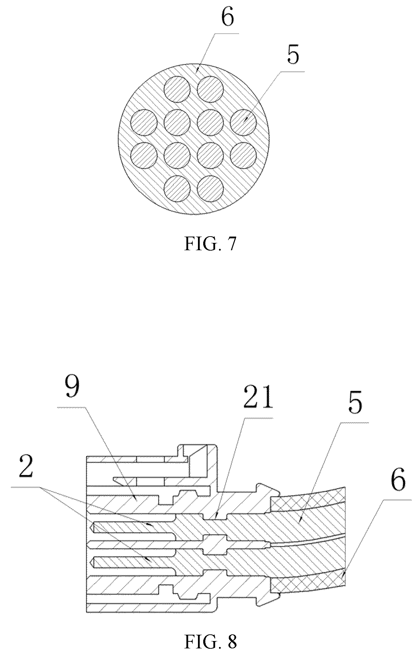

Further, as illustrated in FIG. 7, the flexible conductor core 11 includes a plurality of core wires 5, which are arranged in a wound, twisted, or braided configuration, and are wrapped with a core wire insulation layer 6.

Further, the flexible conductor core 11 may also be formed by laminating and connecting a plurality of layers of foils.

The flexible conductor core needs to conduct current and also be made of a soft material. Thus, the flexible conductor core should be made using thin core wires which are wound or twisted or braided and then wrapped with a core wire insulation layer. For another type of wire harness requiring a unidirectional flexibility, a plurality of layers of foils may be laminated to achieve flexible bending in a lamination direction.

Further, as illustrated in FIGS. 1, 2, 3 and 6, at least one of the plurality of conductor cores is a rigid conductor core 12, which includes at least one bent portion 121.

The rigid conductor core can be arranged following the shape of the vehicle body and integrally mounted on the vehicle body, thereby eliminating the use of the positioning portion and reducing the cost. The internal conductor of the rigid conductor core is an integrated structure, and compared with conductor materials of the core wire and the foil, the processing procedures are fewer and the cost is lower. By providing the bent portion on the rigid conductor core, the rigid conductor core can avoid certain protruding parts on the vehicle body, or can be consistent with the shape of the vehicle body, thereby enabling a faster and better assembly of the wire harness onto the vehicle body.

Further, a cross-section of the rigid conductor core 12 is non-circular.

The shape of a rectangle or a flat strip is easier to be formed. Moreover, during the mounting of the wire harness, the flat surface fits closely to the vehicle body, which can reduce the height of the wire harness and provide more space for the mounting of other components.

As illustrated in FIG. 1, in the first embodiment of the present disclosure, the conductor 1 includes one flexible conductor core 11 and one rigid conductor core 12.

As illustrated in FIG. 2, in the second embodiment of the present disclosure, the conductor 1 includes one flexible conductor core 11 and two rigid conductor cores 12, with the one flexible conductor core 11 connected between the two rigid conductor cores 12.

As illustrated in FIG. 3, in the third embodiment of the present disclosure, the conductor 1 includes one rigid conductor core 12 and two flexible conductor cores 11, with the one rigid conductor core 12 connected between the two flexible conductor cores 11.

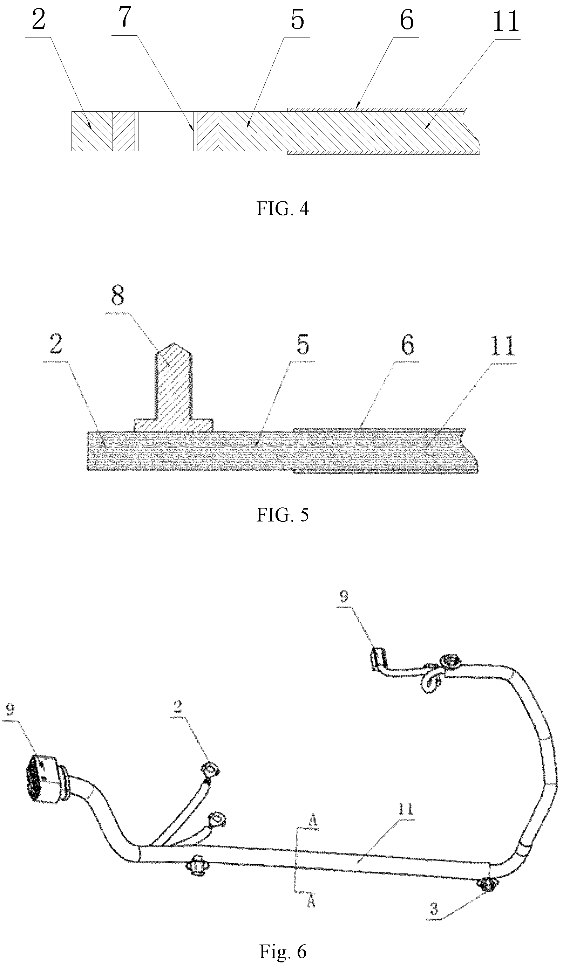

As illustrated in FIG. 6, in the fourth embodiment of the present disclosure, the conductor 1 includes one flexible conductor core 11.

Further, as illustrated in FIGS. 1, 2 and 3, adjacent two conductor cores are connected by welding or crimping or riveting to form an inter-core connection portion 4.

The welding includes explosion welding, plasma welding, pressure welding, diffusion welding, friction welding, resistance welding, ultrasonic welding, or laser welding.

Further, a cross-sectional area of the connection portion 2 is greater than or equal to 80% and less than 120% of a cross-sectional area of the conductor 1 connected to the connection portion 2.

The current conducted by the conductor is directly proportional to the cross-sectional area of the conductor. In order to enable the connection portion 2 to be better connected to the electrical device, the connection portion 2 will be processed into a certain shape. At this time, the cross-sectional area of part of the connection portion 2 may be reduced. If a difference between the reduced cross-sectional area of the connection portion 2 and the cross-sectional area of the conductor (conductor core) exceeds 20%, the resistance of the connection portion 2 will increase. As a result, when the same current is conducted, the temperature of the connection portion 2 will rise. In severe cases, the cable may be burned out, and even a fire accident of the vehicle may be caused.

Further, at least part of a surface of the connection portion 2 is provided with a plating layer.

By providing a plating layer on the connection portion 2, it can improve the electrical conductivity of the surface of the connection portion 2, prevent the formation of an oxide film on the surface of the connection portion 2, and thus avoid an increase in resistance. Moreover, the plating layer can increase the hardness of the surface of the connection portion 2, improve the scratch resistance of the connection portion 2, enhance the connection safety between the connection portion 2 and the electrical device, and extend the service life of the connection portion 2.

Further, the plating layer is a multi-layer structure.

The plating layer is prepared using a multi-layer plating method. After the connection portion 2 is processed, there are still many gaps and voids under a microscopic interface on the surface thereof. These gaps and avoids are the main causes of the wear and the corrosion of the connection portion 2 during use. Therefore, a bottom layer should be firstly plated on the surface of the connection portion 2 to fill the gaps and the voids on the surface, so that the surface of the connection portion 2 is smooth without avoids. Next, a surface layer is plated, so that the bonding is firmer and the surface is smoother, without gaps and avoids on the surface of the plating layer. Therefore, the wear resistance, the corrosion resistance and the electrical properties of the connection portion 2 are better, which greatly prolongs the service life of the connection portion 2.

Further, the plating layer is made of nickel, cadmium, manganese, zirconium, cobalt, tin, titanium, chromium, gold, silver, zinc, tin-lead alloy, silver-antimony alloy, palladium, palladium-nickel alloy, graphite silver, graphene silver, or silver-gold-zirconium alloy.

Further, the connection portion 2 is provided with a bolt structure, which is electrically connected to the connection portion 2.

Through the bolt structure, the connection portion 2 can be better connected to the electrical device. Moreover, due to the need for maintenance or replacement of aged lines, the connection portion 2 should be frequently disassembled from the electrical device. Using the bolt structure to connect the connection portion 2 and the electrical device not only ensures the mechanical strength and the electrical performance between the connection portion 2 and the electrical device, but also allows for easy disassembly.

Further, the connection portion 2 and the electrical device may also be connected as follows: the connection portion 2 is provided with a nut structure, which is electrically connected to the connection portion 2.

Further, as illustrated in FIG. 4, the connection portion 2 is provided with a through hole 7 in which at least part of the bolt structure is disposed.

Further, as illustrated in FIG. 5, the connection portion 2 is provided with a screw rod, which is welded or crimped or snapped onto the connection portion 2 to pass through a mounting hole at a mounting position, and fits with a nut to fix the connection portion 2.

The bolt structure includes a screw rod and/or a nut. The bolt structure may be made of aluminum, or any other material such as copper.

Further, an outer periphery of the conductor 1 is wrapped with a conductor insulation layer. When there is a plurality of conductors, the conductors are integrally formed with the conductor insulation layer, and the conductors are insulated and isolated from each other by the conductor insulation layer.

Further, the integrated wire harness structure further includes a shielding layer, which is provided on an outer side of the conductor insulation layer or integrally formed with the conductor insulation layer. The arrangement of the shielding layer, on the one hand, effectively shields the electromagnetic interference generated by an internal conductor to the outside, and on the other hand, also shields the electromagnetic interference of an external signal on the conductor.

Further, at least part of an outer wall of the conductor is provided with a shock absorber. By providing the shock absorber, the effects of shock absorption and protection can be achieved for the vehicle body and the wire harness.

Further, the shock absorber may be a shock-absorbing layer adhered to or integrally injection-molded on the conductor.

Further, the shock absorber may be made of elastic foam plastic or rubber.

Further, the wire harness also includes a plug-in connector 9, in which at least part of the connection portion 2 is disposed. The wire harness is electrically connected to the electrical device by plugging the plug-in connector 9 with the electrical device.

Further, as illustrated in FIG. 8, the connection portion 2 is provided with at least one clamping portion 21, which is clamped with an inner wall of the plug-in connector 9 so that the clamping portion 21 is fixed in the plug-in connector 9.

Further, as illustrated in FIG. 8, the connection portion 2 and the plug-in connector 9 are integrally injection-molded; and the clamping portion 21 has a groove or a protrusion for matching and clamping with the plug-in connector 9 during the integrated injection molding with the plug-in connector 9.

Further, the wire harness is designed to conform to the shape of the vehicle body and attached to the vehicle body.

The present disclosure further provides a vehicle, which includes a vehicle body and the integrated wire harness structure. The wire harness is arranged to extend along a contour of the vehicle body, and is connected to the vehicle body through the positioning portion 3.

Further, the positioning portion includes a fixing member and a clamping member. The clamping member is detachably connected to the vehicle body, and the clamping member is connected to the wire harness through the fixing member.

In the vehicle of the present disclosure, the integrated wire harness structure is adopted, so that the electrochemical corrosion is greatly reduced, and the electrical safety is improved.

As described above, the integrated wire harness structure and the vehicle of the present disclosure have the following advantageous effects:

In the integrated wire harness structure of the present disclosure, the connection portion and the conductor are integrated, and the connection portion is formed by the extension of the conductor, eliminating the use of copper terminals, and avoiding the electrochemical corrosion and the risks caused by the corrosion. In addition, the welding between the terminal and the conductor can also be eliminated, thereby not only decreasing the raw material cost of the wire harnesses, but also reducing the processing time.

In the vehicle of the present disclosure, the integrated wire harness structure is adopted, so that the electrochemical corrosion is greatly reduced, and the electrical safety is improved.

Those described above are only illustrative embodiments of the present disclosure, and are not intended to limit the scope thereof. Any equivalent change or modification made by those skilled in the art without departing from the concept and the principles of the present disclosure should fall within the protection scope of the present disclosure.

## Claims

1. An integrated wire harness structure, comprising a wire harness configured to be electrically connected to an electric device to conduct current; wherein the wire harness comprises at least one conductor and at least one positioning portion, at least one end of the conductor extends to form a connection portion which is configured to be electrically connected to the electrical device, and the positioning portion is configured to position the conductor.

2. The integrated wire harness structure according to claim **1,** wherein the conductor is made of 1000 series aluminum alloy, 2000 series aluminum alloy, 3000 series aluminum alloy, 4000 series aluminum alloy, 5000 series aluminum alloy, 6000 series aluminum alloy, 7000 series aluminum alloy, or 8000 series aluminum alloy.

3. The integrated wire harness structure according to claim **1,** wherein the conductor is made of one or more selected form the group consisting of carbon, aluminum, silver, and copper.

4. The integrated wire harness structure according to claim **1,** wherein the conductor comprises a plurality of conductor cores connected end to end, at least one of which is a flexible conductor core.

5. The integrated wire harness structure according to claim 4, wherein the conductor comprises at least two materials selected from the group consisting of carbon, aluminum, silver, and copper.

6. The integrated wire harness structure according to claim 4, wherein at least one of the conductor cores has a cross-sectional shape different from cross-sectional areas of other conductor cores.

7. The integrated wire harness structure according to claim 4, wherein at least one of the plurality of conductor cores has a cross-sectional shape different from those of other conductor cores.

8. The integrated wire harness structure according to claim **1,** wherein the connection portion has a hardness higher than that of the conductor.

9. The integrated wire harness structure according to claim 1, wherein the conductor comprises at least a first conductor core segment and a second conductor core segment; the first conductor core segment has a cross-sectional shape different from that of the second conductor core segment, and/or the first conductor core segment has a cross-sectional area different from that of the second conductor core segment.

10. The integrated wire harness structure according to claim 9, wherein the conductor further comprises a transition connection segment; a first end and a second end of the transition connection segment are connected to the first conductor core segment and the second conductor core segment, respectively; and a cross-section of the first end of the transition connection segment is the same as that of the first conductor core segment, and a cross-section of the second end of the transition connection segment is the same as that of the second conductor core segment.

11. The integrated wire harness structure according to claim 1, wherein an absolute value of a difference in electrical conductivity between the connection portion and the conductor is less than or equal to 75%.

12. The integrated wire harness structure according to claim 10, wherein the conductor comprises at least one bending position where the transition connection segment is located.

13. The integrated wire harness structure according to claim 6, wherein a difference in cross-sectional area between two conductor core segments with different diameters is less than or equal to 20%.

14. The integrated wire harness structure according to claim 4, wherein the flexible conductor core comprises a plurality of core wires, which are arranged in a wound, twisted, or braided configuration, and are wrapped with a core wire insulation layer.

15. The integrated wire harness structure according to claim 4, wherein the flexible conductor core is formed by laminating and connecting a plurality of layers of foils.

16. The integrated wire harness structure according to claim 4, wherein at least one of the plurality of conductor cores is a rigid conductor core, which comprises at least one bent portion.

17. The integrated wire harness structure according to claim 16, wherein the rigid conductor core has a non-circular cross-sectional shape.

18. The integrated wire harness structure according to claim 16, wherein adjacent two conductor cores are connected by welding, crimping, or riveting.

19. The integrated wire harness structure according to claim 1, wherein a cross-sectional area of the connection portion is greater than or equal to 80% and less than 120% of a cross-sectional area of the conductor connected thereto.

20. The integrated wire harness structure according to claim 1, wherein at least part of a surface of the connection portion is provided with a plating layer.

21. The integrated wire harness structure according to claim 20, wherein the plating layer is a multi-layer structure.

22. The integrated wire harness structure according to claim 20, wherein the plating layer is made of one or more selected form the group consisting of nickel, cadmium, manganese, zirconium, cobalt, tin, titanium, chromium, gold, silver, zinc, tin-lead alloy, silver-antimony alloy, palladium, palladium-nickel alloy, graphite silver, graphene silver, and silver-gold-zirconium alloy.

23. The integrated wire harness structure according to claim 1, wherein the connection portion is provided with a bolt structure, which is electrically connected to the connection portion.

24. The integrated wire harness structure according to claim 1, wherein the connection portion is provided with a nut structure, which is electrically connected to the connection portion.

25. The integrated wire harness structure according to claim 23, wherein the connection portion is provided with a through hole in which at least part of the bolt structure is disposed.

26. The integrated wire harness structure according to claim 1, wherein an outer periphery of the conductor is wrapped with a conductor insulation layer.

27. The integrated wire harness structure according to claim 26, wherein there is a plurality of conductors, the conductors are integrally formed with the conductor insulation layer, and the conductors are insulated and isolated from each other by the conductor insulation layer.

28. The integrated wire harness structure according to claim 26, further comprising a shielding layer, which is provided on an outer side of the conductor insulation layer or integrally formed with the conductor insulation layer.

29. The integrated wire harness structure according to claim 1, wherein at least part of an outer wall of the conductor is provided with a shock absorber.

30. The integrated wire harness structure according to claim 29, wherein the shock absorber is a shock-absorbing layer adhered to or integrally injection-molded on the conductor.

31. The integrated wire harness structure according to claim 29, wherein the shock absorber is made of elastic foam plastic or rubber.

32. The integrated wire harness structure according to claim 1, wherein the wire harness further comprises a plug-in connector, in which at least part of the connection portion is disposed; and the wire harness is electrically connected to the electrical device by plugging the plug-in connector with the electrical device.

33. The integrated wire harness structure according to claim 32, wherein the connection portion is provided with at least one clamping portion, which is clamped with an inner wall of the plug-in connector so that the clamping portion is fixed in the plug-in connector.

34. The integrated wire harness structure according to claim 33, wherein the connection portion and the plug-in connector are integrally injection-molded; and the clamping portion has a groove or a protrusion for matching and clamping with the plug-in connector during integral injection molding with the plug-in connector.

35. A vehicle, comprising a vehicle body, and the integrated wire harness structure according to any one of claims 1 to 34, wherein the wire harness is arranged to extend along a contour of the vehicle body, and is connected to the vehicle body through the positioning portion.

36. The vehicle according to claim 35, wherein the positioning portion comprises a fixing member and a clamping member; the clamping member is detachably connected to the vehicle body, and the clamping member is connected to the wire harness through the fixing member.
